# EUROPÄISCHE PATENTSCHRIFT

(11) **EP 0 687 583 B1**
(45) Veröffentlichungstag und Bekanntmachung des Hinweises auf die Patenterteilung: **15.07.1998**
(21) Anmeldenummer: 95107097.8
(22) Anmeldetag: 11.05.1995
(51) Int. Cl.: B60D 1/32, B60D 1/06

(54) **Verfahren und Vorrichtung zum Dämpfen der Schlingerbewegung von Fahrzeuganhängern**
Method and apparatus for damping rolling motion of vehicle trailers
Procédé et dispositif pour l'amortissement du mouvement oscillatoire de remorques pour véhicule

(30) Priorität: 17.06.1994 DE 4421209
(43) Veröffentlichungstag der Anmeldung: 20.12.1995
(73) Patentinhaber: AL-KO KOBER AG, D-89359 Kötz (DE)
(72) Erfinder: Pfaudler, Volker, Dipl.-Ing. (FH), D-89349 Burtenbach (DE); Wöhrle, Rudolf, Dipl.-Ing. (FH), D-89335 Ichenhausen (DE)
(74) Vertreter: Ernicke, Hans-Dieter, Dipl.-Ing.

(56) Entgegenhaltungen:
- EP-A- 0 320 202
- DE-U- 1 888 887
- FR-A- 2 432 396
- US-A- 2 998 268

## Beschreibung

Die Erfindung betrifft ein Verfahren und eine Vorrichtung zum Dämpfen der Schlingerbewegung von Fahrzeuganhängern mittels einer Reibungsbremse an der Anhängerkupplung mit den Merkmalen im Oberbegriff des Hauptanspruchs.

Ein solches Dämpfverfahren und eine derartige Reibungsbremse sind aus der EP-A-0 320 202 bekannt. Die Reibungsbremse besitzt zwei einander gegenüberliegende und schwimmend gehaltene Reibstößel, die an das Kupplungsorgan des Zugfahrzeuges anstellbar sind. Diese Reibstößel bilden zugleich die Kupplungsschale. Zur Betätigung der Reibstößel ist ein schwenkbarer Kupplungshebel vorhanden, mit dem die gesamte Anhängerkupplung geöffnet und geschlossen wird. Die vorbekannte Kupplung ist als hydraulische Kupplung ausgebildet. Über den Kupplungshebel wird nur die anfängliche Öffnungs- und Schließbewegung erzeugt, wobei der Kupplungshebel gegen eine rückwärtige Feder arbeitet. Im Betrieb werden die Reibstößel unter hydraulischem Druck angepreßt, der über eine Leitung in den Kolbenraum eingespeist wird. Der eine rückwärtige Reibstößel ist zugleich als Hydraulikkolben ausgebildet. In der einen Ausführungsform wird nur der eine Reibstößel durch den Kolben zugestellt. Der andere Reibstößel ist starr im Kupplungsgehäuse angeordnet. In der anderen Ausführungsform werden beide Reibstößel mit Kolben ausgerüstet und über eine Bypassleitung gleichzeitig mit Hydraulikdruck beaufschlagt und gleichzeitig zugestellt. Die hydraulische Zustellung ist starr und nicht federnd.

Eine andere Reibungsbremse ist aus der DE-C-3 425 804 bekannt. Sie besitzt zwei einander gegenüberliegende Reibstößel, die schwimmend im Kupplungsgehäuse gehalten sind. Die beiden Reibstößel werden mit einer Spanngabel gleichzeitig an das Kupplungsorgan, hier eine Kupplungskugel, zugestellt und federnd angepreßt. Die Anpreßkraft wird durch eine zwischen den Enden der Gabelarme angeordnete Spannfeder aufgebracht. Bei dieser Reibungsbremse wird der Verschleiß der Reibstößel über die Spannfeder aufgenommen. Dies führt aber gleichzeitig dazu, daß die Federkraft und damit die Spannkraft sinkt, mit der die Reibstößel an die Kupplungskugel angepreßt werden. Außerdem erfordert diese Konstruktion einen gewissen Bau- und Platzaufwand. Für diese Kupplung mit Reibungsbremse gibt es in der Praxis eine Sperrvorrichtung aus mehreren getrennten Einzelteilen, die aus einem Steckschloß, einer Diebstahlsicherung und einer Schraubensicherung besteht.

Die DE-C-3 829 132 zeigt eine weitere Reibungsbremse, bei der ebenfalls zwei seitliche Reibstößel federnd an das Kupplungsorgan des Zugfahrzeuges zugestellt werden. Sie werden gleichzeitig mittels eines gemeinsamen Drehgriffes betätigt und zugestellt, wobei die Drehbewegung über eine Bajonettführung in die axiale Zustellbewegung der Reibstößel umgesetzt wird. Die Reibstößel sind einzeln federnd an den Stellköpfen des Bedienungshebels gelagert. Zur Verschleißaufnahme werden sie einzeln nachgestellt. Bei der bekannten Reibungsbremse wird ein Kompromiß zwischen dem zur Verfügung stehenden Bauraum, dem benötigten Drehwinkel des Bedienhebels und der erforderlichen Handkraft geschlossen.

Es ist daher Aufgabe der vorliegenden Erfindung, eine Möglichkeit aufzuzeigen, den verschiedenen an die Reibungsbremse gestellten Anforderungen besser gerecht zu werden und eine bessere und leichtere Bedienbarkeit zu erreichen.

Die Erfindung löst diese Aufgabe mit den Merkmalen im Verfahrens- und Vorrichtungshauptanspruch. Mit der erfindungsgemäßen Einzelzustellung der Reibstößel, die unabhängig voneinander erfolgt, ist es möglich, den Verschleiß der Reibstößel optimal aufzunehmen, wobei die Spannkraft der Reibungsbremse ungeschmälert erhalten bleibt. Die Verschleißaufnahme erfolgt mit jedem Schließen der Reibungsbremse automatisch. Der Bediener muß nicht ständig die Verschleißkontrolle beobachten und braucht auch nicht die Reibstößel wie beim Stand der Technik separat nachzustellen. Die Reibungsbremse hat dadurch insgesamt eine höhere Betriebssicherheit, wobei sie auch einen geringeren Bedienaufwand erfordert.

Durch die getrennte Zustellbewegung und die getrennten Betätigungsorgane kommt die erfindungsgemäße Reibungsbremse mit wesentlich weniger Bauraum als vorbekannte Konstruktionen aus. Dabei können die Betätigungsorgane jeder für sich auf Bedienungsfreundlichkeit und insbesondere Handkraft optimiert werden. Die Zustellung des ersten Reibstößels zur Verschleißaufnahme erfolgt ohne wesentlichen Kraftaufwand. Das Betätigungsorgan ist vorzugsweise als Zustellrad ausgebildet, das je nach Verschleiß der Reibstößel einen kleineren oder größeren Drehweg zurücklegt. Eine Rutschkupplung sorgt dafür, daß der erste Reibstößel stets mit gleicher Kraft zugestellt wird. Mit dem zweiten Betätigungsorgan, das vorzugsweise als Spannhebel ausgebildet ist, wird die Spann- und Schließkraft der Reibungsbremse aufgebracht. Nachdem vor der Betätigung des Spannhebels bereits beide Reibungsstößel in Kontakt mit dem Kupplungsorgan sind, wird bei gleichbleibenden Drehweg des Spannhebels stets die gleiche Spannkraft aufgebracht.

Die Federkraft, mit der die Reibstößel an das Kupplungsorgan angepreßt werden, wird durch ein gegenüber dem Kupplungsorgan schwimmend gelagertes Spannelement aufgebracht, das in der bevorzugten Ausführungsform als Federbügel über der Kupplungskugel ausgebildet ist, das aber auch eine andere Gestaltung haben kann. Das Spannelement wird bei der Zustellbewegung des ersten Reibstößels gegenüber dem Kupplungsorgan verschoben und bei der Zustellbewegung des zweiten Reibstößels federnd gespannt. In der bevorzugten Ausführungsform wird der Federbügel gedehnt und entwickelt eine federnde Rückstellkraft. Das Spannelement braucht im Gegensatz zum Stand der Technik keinen Verschleiß aufzunehmen und hat dadurch einen konstanten Spannweg und eine gleichbleibende Spannkraft. Zur Führung des vorzugsweise auf dem Kupplungsgehäuse schwimmend gelagerten Spannelementes kann eine Einrastanzeige verwendet werden, die die korrekte Schließstellung der Anhängerkupplung und der Schließmechanik signalisiert.

Die erfindungsgemäße Anhängerkupplung verfügt über eine einfache und wenig bau- und bedienungsaufwendige Sperrvorrichtung, die zugleich ein Öffnen der Reibungsbremse und der Kupplungsmechanik verhindert. Zusätzlich und ohne Mehraufwand kann auch eine Abnahme der kompletten Anhängerkupplung vom Zugholm des Anhängers verhindert werden. Die Sperrvorrichtung ist verschließbar und ist besonders für die erfindungsgemäße Ausgestaltung der Reibungsbremse geeignet und angepaßt. Sie läßt sich bei entsprechender Anpassung aber auch in Verbindung mit bekannten Reibungsbremsen mit Vorteil einsetzen.

Die Anhängerkupplung und die Reibungsbremse werden mit der erfindungsgemäßen Funktion und Gestaltung betriebssicherer und leichter bedienbar. Außerdem vermindern sich die Herstellkosten. Für die Anhängerkupplung mit Kupplungsmechanik und Kupplungsgehäuse kann auf kostengünstige Standardkonstruktionen zurückgegriffen werden. Die Anhängerkupplung mitsamt der Reibungsbremse braucht in der Höhe sowohl in Schließ- als auch in Öffnungsstellung nur noch sehr wenig Platz. Sie läßt sich auch in Verbindung mit Zugfahrzeugen einsetzen, die durch überstehende Aufbauten oder dergleichen nur wenig Freiraum über dem Kupplungsorgan haben.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Anhängerkupplung mit einer Reibungsbremse in Seitenansicht,

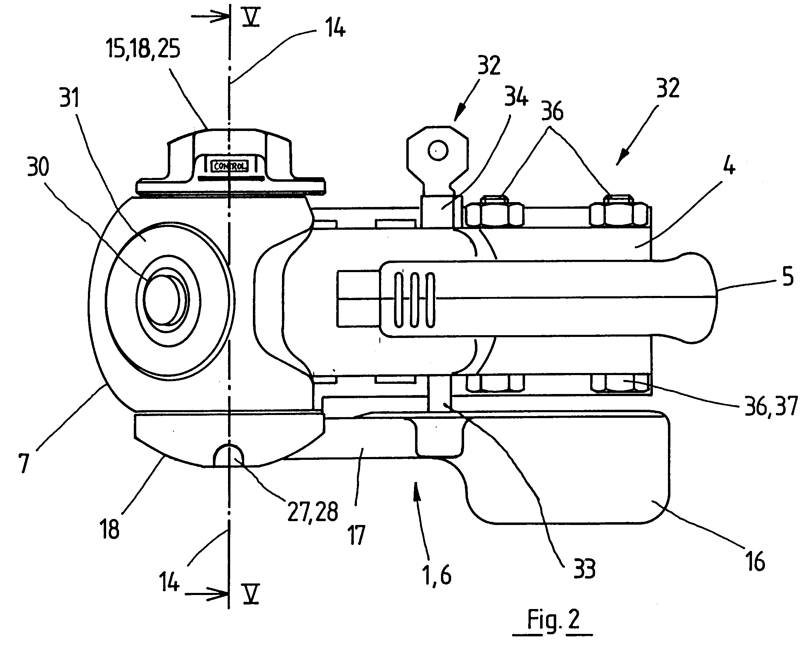

- Figur 2:: die Anhängerkupplung und Reibungsbremse in Draufsicht entsprechend Pfeil II von Fig. 1,

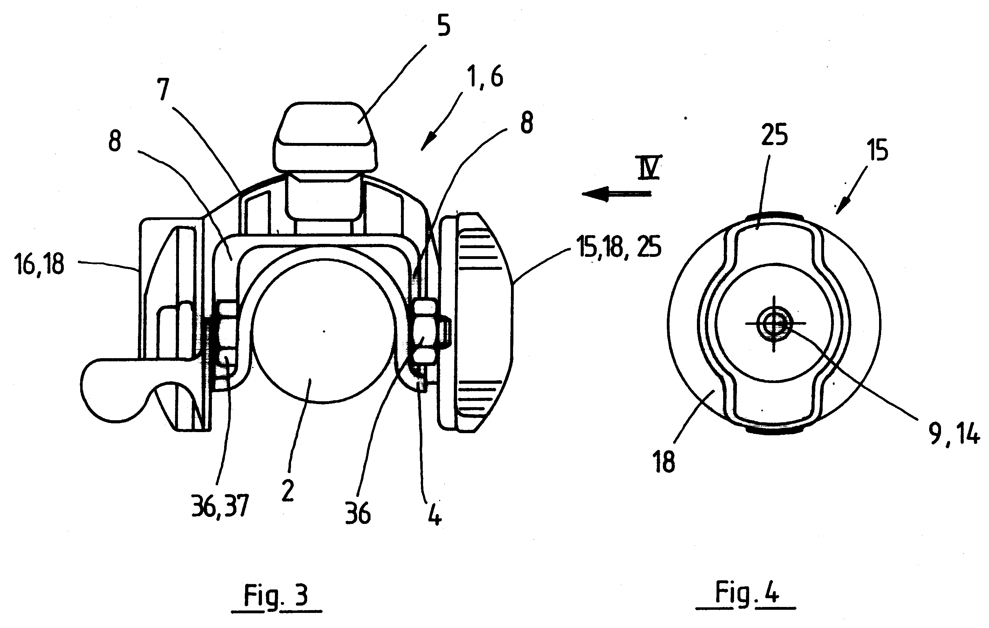

- Figur 3:: eine rückwärtige Stirnansicht der Anordnung gemäß Pfeil III von Fig. 1,
- Figur 4:: eine Seitenansicht auf das eine Betätigungsorgan der Reibungsbremse gemäß Pfeil IV von Figur 3,
- Figur 5:: einen Querschnitt durch die Reibungsbremse gemäß Schnittlinie V-V von Figur 2 und
- Figur 6 und 7:: Seitenansicht und Draufsicht eines Sperrstiftes.

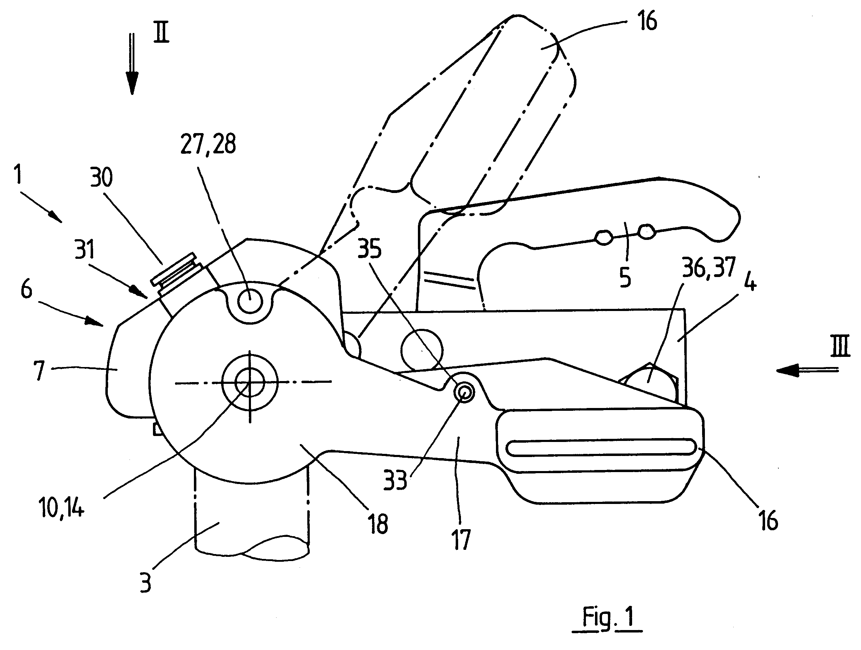

Figur 1 zeigt eine Anhängerkupplung (1) für Fahrzeuganhänger. Sie besteht aus einem Kupplungsgehäuse (4) mit einer innenseitigen Kupplungsmechanik (nicht dargestellt) und einem Kupplungsgriff (5). Das Kupplungsgehäuse (4) wird mit dem Zugholm, der Deichsel oder dgl. Anschlußteil eines Fahrzeuganhängers (nicht dargestellt) mittels Gehäuseschrauben (36) verbunden. Die Anhängerkupplung (1) wird auf das Kupplungsorgan (2), hier vorzugsweise eine Kupplungskugel, des Zugfahrzeugs (nicht dargestellt) aufgesetzt und mit der Kupplungsmechanik verriegelt. Das Kupplungsgehäuse (4) hat am vorderen Ende eine halbkugelförmige Kalotte und spannt zusammen mit der Kupplungsmechanik die Kupplungskugel (2) in Schließstellung formschlüssig ein.

Die Anhängerkupplung (1) ist mit einer Dämpfvorrichtung (6) zum Dämpfen der Schlingerbewegung des Fahrzeuganhängers ausgerüstet. Die Dämpfvorrichtung (6) ist als Reibungsbremse ausgebildet, die vorzugsweise getrennt und zusätzlich zur Kupplungsmechanik angeordnet ist. Für das Kupplungsgehäuse (4) und die Kupplungsmechanik nebst Kupplungsgriff (5) kann weitgehend auf standardisierte Bauteile von konventionellen Anhängerkupplungen zurückgegriffen werden.

Die Reibungsbremse (6) besitzt zwei Reibstößel (9,10), die von der Seite her mittels zweier Betätigungsorgane (15,16) und eines Spannelementes (7) an das Kupplungsorgan (2) federnd anpreßbar sind. Die Achsen (14) der einander am Kupplungsorgan (2) gegenüberliegenden Reibstößel (9,10) fluchten miteinander und erstrecken sich vorzugsweise quer zur Längs- oder Schlepprichtung des Fahrzeuganhängers. Die Reibstößel (9,10) sind in der nachfolgend näher beschriebenen Weise jeweils in einem Betätigungsorgan (15,16) gehalten, wobei die Betätigungsorgane (15,16) über eine Schraubverbindung (21) drehbar am Spannelement (7) gelagert sind.

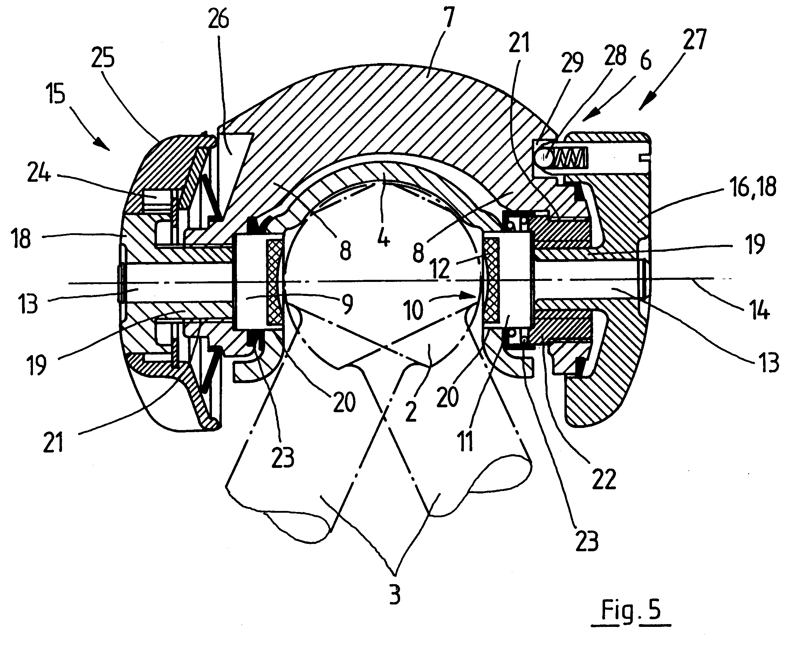

Figur 5 verdeutlicht im Querschnitt die Ausbildung der Reibstößel (9,10). Sie sind gleichartig ausgebildet und bestehen jeweils aus einem Belagträger (11) mit einem vorderseitig angeordneten Reibbelag (12), der dem Kupplungsorgan (2) nachgeformt ist. Der Belagträger (11) geht rückseitig in einen dünneren Schaft (13) über, der in einem rohrförmigen Ansatz (19) des jeweils zugehörigen Betätigungsorgans (15,16) lösbar geführt ist. Am herausstehenden Ende des Schaftes (13) kann ein Federring oder ein zugleich dichtender O-Ring für den lösbaren Halt angeordnet sein.

Die Reibstößel (9,10) greifen durch das Kupplungsgehäuse (4) an das Kupplungsorgan (2). Hierfür sind seitliche Durchtrittsöffnungen (20) im Kupplungsgehäuse (4) vorgesehen, in denen der Belagträger (11) umfangsseitig geführt ist. Vorzugsweise haben die Belagträger (11) und die korrespondierenden Durchtrittsöffnungen (20) eine kreisrunde Form, können aber auch anders ausgebildet sein.

Das Spannelement (7) ist in der bevorzugten Ausführungsform als im wesentlichen U-förmiger Federbügel ausgebildet, der das Kupplungsorgan (2) und den vorderen Bereich des Kupplungsgehäuses (4) übergreift. Der Federbügel (7) ist vorzugsweise als Stahlteil ausgebildet. Er kann alternativ aber auch aus einem anderen geeigneten metallischen oder nichtmetallischen Material bestehen. Die Federwirkung kommt vorzugsweise aus der Formstabilität des Federbügels (7). Der Federbügel (7) ist in Richtung der Reibstößelachsen (14) schwimmend gelagert. Durch seitliche Federn (23) im Bereich der Reibungsstößel (9,10) wird der Federbügel (7) gegenüber dem Kupplungsgehäuse (4) zentriert.

Wie Figur 1 verdeutlicht, übergreift der Federbügel (7) von der Seite her gesehen in einem Bogenabschnitt über etwa 90° das Kupplungsorgan (2) und die Front das Kupplungsgehäuses (4). Der Federbügel (7) bildet dadurch eine im wesentlichen kugelabschnittsförmige Haube. Am Übergang zwischen Vorder- und Oberseite befindet sich eine Abflachung (31), an der auch eine Einrastanzeige (30) angeordnet ist. Die Einrastanzeige (30) dient zur Signalisierung der korrekten Schließstellung der Anhängerkupplung (1) und ist in an sich bekannter Weise ausgebildet, z.B. gemäß DE-GM 88 11 433.

Der durch den Federbügel (7) nach außen ragende Bolzen der Einrastanzeige (30) dient zur Führung des Federbügel (7) und verhindert Verschiebungen oder Schwenkbewegungen des Federbügels (7) gegenüber dem Kupplungsgehäuse (4) quer oder um die Reibstößelachsen (14). Diese Führungsaufgabe können auch andere Kupplungsteile wahrnehmen. Die Durchgangsöffnung im Federbügel (7) ist als ein in Richtung der Reibstößelachsen (14) sich erstreckendes Langloch ausgebildet, so daß der Federbügel an der Einrastanzeige (30) geführt in Richtung der Reibstößelachsen (14) auf dem Kupplungsgehäuse (4) hin- und hergleiten kann.

In den beiden seitlichen Bügelarmen (8) des Federbügels (7) sind die beiden Betätigungsorgane (15,16) über die vorerwähnte Schraubverbindung (21) und die Ansätze (19) drehbar geführt. Bei der Schraubverbindung (21) handelt es sich vorzugsweise um ein selbsthemmendes Gewinde. Auf dem Ansatz (19) kann auch eine Buchse (22) aufgezogen sein, die dann das Gewinde trägt, wie z. B. beim Betätigungsorgan (16). Wie Figur 5 verdeutlicht, ist der Federbügel (7) mit einer geeigneten Ausdrehung an den Gewindeöffnungen direkt auf dem Belagträger (11) oder mittelbar über die entsprechend geformte Buchse (22) geführt. Die Gewindeöffnungen in den seitlichen Bügelarmen (8) fluchten mit den Durchtrittsöffnungen (20) im Kupplungsgehäuse (4).

Das dem ersten Reibstößel (9) zugeordnete Betätigungsorgan (15) ist vorzugsweise als Zustellrad ausgebildet. Es besteht aus einem Drehteil (18), von dem der vorerwähnte Ansatz (19) mit der Schraubverbindung (21) wegragt. Auf dem Drehteil (18) ist umfangsseitig ein Griffteil (25) angeordnet, das als Ringscheibe mit knebelartigen Griffvorsprüngen ausgebildet ist. Zwischen dem Drehteil (18) und dem Griffteil (25) kann eine Rutschkupplung (24) angeordnet sein. Bis zum Erreichen eines vorzugsweise einstellbaren Drehmomentes nimmt das von Bediener betätigte Griffteil (25) das Drehteil (18) mit und rutscht bei Überschreiten der Momentengrenze durch.

Bei Betätigung des Zustellrades (15) wird der Ansatz (19) in den Federbügel (7) geschraubt und schiebt den Reibstößel (9) zum Kupplungsorgan (2). Der Federbügel (7) besitzt im Bereich des Zustellrades (15) eine seitliche Ausnehmung (16), in die das Griffteil (25) über den Zustellweg eintaucht. Die Eintauchtiefe ist ein Maß für den Zustellweg des Reibstößels (9) und kann durch Markierungen am Griffteil (25) signalisiert werden. Wenn die Verschleißgrenze erreicht ist und die Reibstößel (9,10) bzw. die Reibbeläge (12) ausgetauscht werden müssen, wird dies dem Bediener durch eine entsprechende Markierung zur Anzeige gebracht.

Das andere Betätigungsorgan (16), das dem zweiten Reibstößel (19) zugeordnet ist, ist als drehbarer Spannhebel ausgebildet. Es besteht ebenfalls aus einem Drehteil (18) mit dem erwähnten vorspringenden Ansatz (19) und einem Hebelarm (17) mit einem endseitigen Griff. Das Drehteil (18) hat im wesentlichen die Form einer gewölbten Kreisscheibe. Der Federbügel (7) ist an der dem Drehteil (18) zugewandten Seite abgestuft, wobei das Drehteil (18) mit seinem axial vorstehenden Rand den ebenfalls im wesentlichen kreisförmigen Stufenansatz übergreift. Zwischen dem Drehteil (18) und dem Federbügel (7) kann eine Feder und/oder eine Dichtung in der in Figur 5 gezeigten Weise angeordnet sein. Eine ähnliche Anordnung kann auch beim Zustellrad (15) vorhanden sein.

Der Spannhebel (16) kann beispielsweise einen Zuspannwinkel von ca. 60° überstreichen. Figur 1 zeigt die Öffnungsstellung mit hochragenden Spannhebel (16) mit gestrichelten Linien. In der mit durchgezogenen Linien dargestellten Schließstellung liegt der Spannhebel (16) im wesentlichen horizontal und erstreckt sich in etwa längs der Zug- oder Schlepprichtung des Fahrzeuganhängers neben dem Kupplungsgehäuse (4). Über die Schraubbewegung des Spannhebels (16) schiebt der Ansatz (19) den zweiten Reibstößel (10) vor und preßt über das Spannelement (7) beide Reibstößel (9,10) an das Kupplungsorgan (2) an.

Anfangs- und Endstellung des Zuspannweges werden über eine Arretiervorrichtung (27) markiert und gegebenenfalls auch begrenzt. In der bevorzugten Ausführungsform ist diese als Federraste ausgebildet, wobei im Drehteil (18) ein Stift (28) federnd gelagert ist, der in den beiden Endstellungen des Schwenkweges in entsprechende seitliche Öffnungen (29) des Federbügels (7) greift.

Die Anhängerkupplung (1) und die Reibungsbremse (6) funktionieren wie folgt:
Zum Ankuppeln des Anhängers wird die Anhängerkupplung (1) in der eingangs beschriebenen Weise auf das Kupplungsorgan (2) gesetzt und die Kupplungsmechanik mit dem Kupplungsgriff (5) geschlossen. Beim Ankuppeln ist die Reibungsbremse (6) offen, d. h. die Reibungsstößel (9,10) sind zurückgezogen. Zum Schließen der Reibungsbremse (6) wird zuerst das Zustellrad (15) gedreht, wobei der erste Reibstößel (9) zugestellt wird. Wenn er zur Anlage am Kupplungsorgan (2) kommt, wird das Zustellrad (15) noch weitergedreht, wobei der Federbügel (7) gegen die Kraft der gegenüberliegenden Feder (23) zum Zustellrad (15) hingezogen wird. Durch diese Verschiebebewegung kommt schließlich auch der zweite Reibstößel (10) in Kontakt mit dem Kupplungsorgan (2).

Bis zum Erreichen des Ansprechmoments der Rutschkupplung (24) kann das Zustellrad (15) weitergedreht werden, wobei die beiden Reibstößel (9,10) immer stärker an das Kupplungsorgan (2) angepreßt werden. Der Federbügel (7) wird dadurch in Richtung der Reibstößelachsen (14) gespreizt und unter Entfaltung einer federnden Rückstellkraft gedehnt. Sobald die Momentengrenze der Rutschkupplung (24) erreicht ist, rutscht das Zustellrad (15) durch, was dem Bediener durch ein Ratschgeräusch signalisiert wird.

Über den Zustellweg des ersten Reibstößels (9) wird der zum An- und Abkuppeln erforderliche Rückzugsweg beider Reibstößel (9,10) aufgenommen. Zugleich wird auch der an den Reibbelägen (12) mit der Zeit entstehende Reibverschleiß aufgenommen. Der durch die Verschleißaufnahme sich vergrößernde Zustellweg wird in der vorerwähnten Weise am Griffteil (25) signalisiert. Bei der Zustellbewegung des ersten Reibstößels (9) wird der zweite Reibstößel (10) bzw. sein Betätigungsorgan (16) vorzugsweise nicht betätigt.

Sobald das Zustellrad (15) durchrutscht, wird der Spannhebel (16) aus der in Figur 1 gezeigten aufgerichteten Stellung nach unten in die liegende Schließstellung gedreht. Dabei wird über die bereits anliegenden Reibstößel (9,10) der Federbügel (7) gedehnt und die für die Dämpfung erforderliche federnde Spannkraft der Reibstößel (9,10) aufgebracht. In der Öffnungs- und Schließstellung rastet der Spannhebel (16) ein und läßt sich nur von Hand aus der Raststellung lösen. Die Reibungsbremse (6) ist nun geschlossen und hat unabhängig vom Verschleiß stets die gleiche Spannkraft, so daß sie eine gleichbleibende Dämpfwirkung erzielt. Die Anhängerkupplung (1) kann sich dabei in Grenzen auf dem Kupplungsorgan (2) verdrehen, was z. B. Figur 5 mit den gestrichelten Schwenkstellungen von Kupplungskugel (2) und Kupplungshals (3) verdeutlicht.

Zum Abkuppeln wird zunächst die Reibungsbremse (6) geöffnet, wobei die vorbeschriebenen Vorgänge in umgekehrter Reihenfolge ablaufen. Zuerst wird der Spannhebel (16) nach oben gedreht. Anschließend wird das Zustellrad (15) zurückgedreht, wobei die Reibstößel (9,10) vom Kupplungsorgan (2) gelöst werden. Durch die Federn (23) zentriert sich der Federbügel (7) wieder auf dem Kupplungsgehäuse (4). Sobald das Kupplungsorgan (2) frei ist, kann über den Kupplungsgriff (5) die Kupplungsmechanik gelöst und der Anhänger abgekuppelt werden.

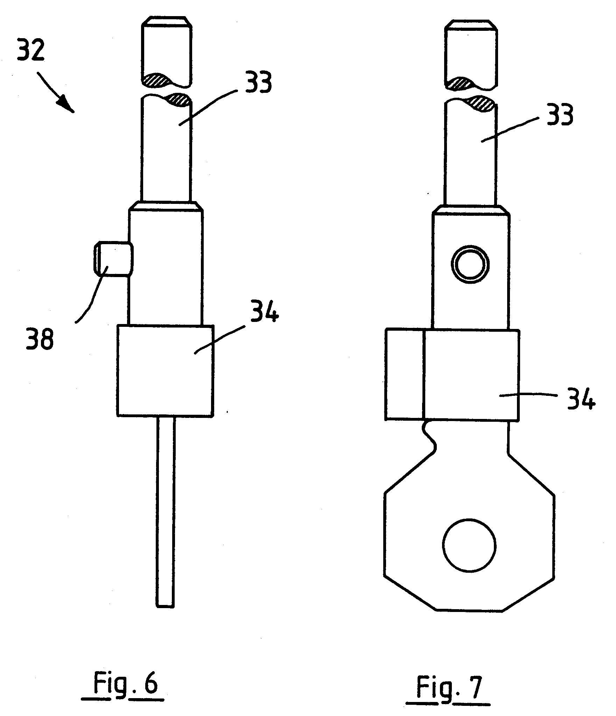

Um ein unbefugtes Öffnen der Reibungsbremse (6) zu verhindern, ist eine Sperrvorrichtung (32) vorgesehen. Sie weist einen in Figur 6 und 7 näher dargestellten Sperrstift (33) auf, der einen seitlich vorstehenden Riegel (38) besitzt und mit einem Schloß (34) ausgerüstet ist. Im Kupplungsgehäuse (4) sind zwei seitliche Gehäuseöffnungen (35) angeordnet, durch die der Sperrstift (33) gesteckt werden kann. Über das Schloß (34) kann in Einsteckstellung der Riegel (38) ausgefahren werden, der ein Abziehen des Sperrstiftes (33) verhindert.

Die Gehäuseöffnungen (35) sind so plaziert, daß der Sperrstift (33) mit seinem aus dem Kupplungsgehäuse (4) ragenden Vorderende mit dem in Schließstellung befindlichen Spannhebel (16) in sperrenden Eingriff tritt. Er kann dazu direkt in eine Öffnung am Hebelarm (17) greifen. Das vordere Stiftende kann aber auch über den Hebelarm (17) ragen und ein Hochdrehen verhindern. Durch die liegende Anordnung des Hebelarms (17) in Schließstellung ist es andererseits möglich, den Sperrstift (33) unter die Kupplungsmechanik bzw. den Kupplungsgriff (5) greifen zu lassen und dadurch auch ein Abkuppeln zu verhindern.

Im Sinne der Sperrvorrichtung (32) sind ferner die eingangs erwähnten Gehäuseschrauben (36) derart durch das Kupplungsgehäuse (4) und den Zugholm gesteckt, daß die Schraubenköpfe (37) auf der den Spannhebel (16) zugewandten Gehäuseseite liegen. In Schließstellung der Reibungsbremse (6) überdeckt der Hebelarm (17) die Schraubenköpfe (37). Die Anhängerkupplung (1) kann dann nicht mehr abgeschraubt und vom Zugholm entfernt werden. Die Muttern der Gehäuseschrauben (36) lassen sich zwar lösen. Durch die Hebelüberdeckung können die Gehäuseschrauben (36) aber nicht aus dem Kupplungsgehäuse (4) herausgezogen werden.

Abwandlungen des beschriebenen Ausführungsbeispieles sind in verschiedener Weise möglich.
Zum einen kann das Kupplungsorgan in beliebiger Weise geformt sein, wobei die relevanten Teile der Anhängerkupplung (1) und der Reibungsbremse (6) entsprechend angepaßt und geändert sind. Bei der Reibungsbremse (6) muß das Spannelement (7) kein separates Teil bilden, sondern kann auch Bestandteil des Kupplungsgehäuses (4) sein. Das Spannelement (7) kann auch in anderer Weise ausgebildet und/oder dem Kupplungsgehäuse zugeordnet sein, um eine federnde Spannkraft zwischen den Reibstößeln bzw, den Betätigungsorganen aufzubauen. In weiterer Abweichung können die Reibstößel (9,10) über die Schraubverbindung am Spannelement gelagert und mit den Betätigungsorganen dann gegebenenfalls fest verbunden sein. Die Betätigungsorgane können ebenfalls abgewandelt werden. Es kann sich statt um Drehteile auch um Schwenkteile oder Schiebeteile mit entsprechender Kinematik handeln. Außerdem können Zusatzeinrichtungen, wie hydraulische oder pneumatische Spanner etc. eingesetzt werden.

Die Sperrvorrichtung läßt sich auch für andere Anhängerkupplungen mit Reibungsbremse abwandeln und einsetzen, wobei z.B. das Sperrorgan so angeordnet und/oder mit Anbauteilen etc. ausgebildet ist, daß es zugleich das Betätigungsorgan der Reibungsbremse und die Kupplungsmechanik bzw. den Kupplungsgriff erfaßt. Eventuell sind die Griffe und sonstigen Teile der Kupplung bzw. Reibungsbremse entsprechend anzupassen.

### BEZUGSZEICHENLISTE

- 1: Anhängerkupplung
- 2: Kupplungsorgan, Kupplungskugel
- 3: Kupplungshals
- 4: Kupplungsgehäuse
- 5: Kupplungsgriff
- 6: Dämpfvorrichtung, Reibungsbremse
- 7: Spannelement, Federbügel
- 8: Bügelarm
- 9: Reibstößel
- 10: Reibstößel
- 11: Belagträger
- 12: Reibbelag
- 13: Schaft
- 14: Reibstößelachse
- 15: Betätigungsorgan, Zustellrad
- 16: Betätigungsorgan, Spannhebel
- 17: Hebelarm
- 18: Drehteil
- 19: Ansatz
- 20: Durchtrittsöffnung
- 21: Schraubverbindung, Gewinde
- 22: Buchse
- 23: Feder
- 24: Rutschkupplung
- 25: Griffteil
- 26: Ausnehmung
- 27: Arretiervorrichtung, Federraste
- 28: Stift
- 29: Öffnung
- 30: Einrastanzeige
- 31: Abflachung
- 32: Sperrvorrichtung
- 33: Sperrstift
- 34: Schloß
- 35: Gehäuseöffnung
- 36: Gehäuseschrauben
- 37: Schraubenkopf
- 38: Riegel

## Patentansprüche

1. Verfahren zum Dämpfen der Schlingerbewegung von Fahrzeuganhängern mittels einer Reibungsbremse (6) an der Anhängerkupplung (1), wobei zumindest zwei einander gegenüberliegende, schwimmend gehaltene Reibstößel (9,10) an das Kupplungsorgan (2) des Zugfahrzeugs zugestellt und federnd angepreßt werden, dadurch **gekennzeichnet**, daß die Reibstößel (9,10) durch getrennte Betätigungsorgane (15,16) einzeln und nacheinander an das Kupplungsorgan (2) zugestellt werden, wobei mit der Zustellbewegung des ersten Reibstößels (9) beide Reibstößel (9,10) unter Aufnahme des Reibverschleißes in Kontakt mit dem Kupplungsorgan (2) gebracht werden und mit der Zustellbewegung des zweiten oder weiteren Reibstößels (10) eine federnde Spannkraft aufgebracht wird, die zwischen den Reibstößeln (9,10) wirkt.

2. Verfahren nach Anspruch 1, dadurch **gekennzeichnet**, daß die Anpreßkraft des ersten Reibstößels (9) begrenzt wird.

3. Verfahren nach Anspruch 1 oder 2, dadurch **gekennzeichnet**, daß der zweite oder weitere Reibstößel (10) mit konstantem Weg und gleichbleibender Spannkraft zugestellt wird.

4. Vorrichtung zum Dämpfen der Schlingerbewegung von Fahrzeuganhängern mittels einer Reibungsbremse (6) an der Anhängerkupplung (1), wobei die Reibungsbremse (6) mindestens zwei einander gegenüberliegende, schwimmend gehaltene Reibstößel (9,10) aufweist, die an das Kupplungsorgan (2) des Zugfahrzeugs zustellbar und federnd anpreßbar sind, dadurch **gekennzeichnet**, daß die Reibstößel (9,10) durch ein gemeinsames federndes Spannelement (7) miteinander verbunden sind, das schwimmend gegenüber dem Kupplungsorgan (2) gelagert ist, wobei die Reibstößel (9,10) einzeln zugestellt werden, getrennte Betätigungsorgane (15,16) aufweisen und in Schließstellung von dem Spannelement (7) federnd an das Kupplungsorgan (2) anpreßbar sind.

5. Vorrichtung nach Anspruch 4, dadurch **gekennzeichnet**, daß die Reibstößel (9,10) am Spannelement (7) gelagert sind.

6. Vorrichtung nach Anspruch 4 oder 5, dadurch **gekennzeichnet**, daß das Spannelement (7) über dem Kupplungsorgan (2) in Richtung der Reibstößelachsen (14) schwimmend gelagert ist.

7. Vorrichtung nach Anspruch 4, 5 oder 6, dadurch **gekennzeichnet**, daß das Spannelement (7) als Federbügel ausgebildet ist, der das Kupplungsgehäuse (4) übergreift und quer zu den Reibstößelachsen (14) geführt ist.

8. Vorrichtung nach einem der Ansprüche 4 bis 7, dadurch **gekennzeichnet**, daß die Reibstößel (9,10) in seitlichen Durchtrittsöffnungen (20) des Kupplungsgehäuses (4) geführt sind.

9. Vorrichtung nach einem der Ansprüche 4 bis 8, dadurch **gekennzeichnet**, daß die Betätigungsorgane (15,16) drehbar am Spannelement (7) gelagert sind.

10. Vorrichtung nach Anspruch 9, dadurch **gekennzeichnet**, daß das eine Betätigungsorgan (15) als Spannrad und das andere Betätigungsorgan (16) als Spannhebel ausgebildet ist.

11. Vorrichtung nach Anspruch 9 oder 10, dadurch **gekennzeichnet**, daß die Reibstößel (9,10) in den Betätigungsorganen (15,16) mit axialer Abstützung gehalten sind, wobei die Betätigungsorgane (15,16) mittels einer Schraubverbindung (21) am Spannelement (7) zugestellt werden.

12. Vorrichtung nach einem der Ansprüche 4 bis 11, dadurch **gekennzeichnet**, daß das eine Betätigungsorgan (15) eine Rutschkupplung (24) aufweist.

## Claims

1. Method for damping the rolling motion of vehicle trailers by means of a friction brake (6) on the trailer hitch (1), in which at least two mutually opposite, floatingly held friction rams (9, 10) are advanced and resiliently pressed onto the hitch member (2) of the towing vehicle, characterized in that the friction rams (9, 10) are individually and successively advanced onto the hitch member (2) by separate actuating members (15, 16), the advancing movement of the first friction ram (9) resulting in both friction rams (9, 10) being brought into contact with the hitch member (2), while taking up the friction wear, and the advancing movement of the second or further friction ram (10) resulting in a resilient clamping force which acts between the friction rams (9, 10) being applied.

2. Method according to Claim 1, characterized in that the pressing-on force of the first friction ram (9) is limited.

3. Method according to Claim 1 or 2, characterized in that the second or further friction ram (10) is advanced with a constant travel and uniform clamping force.

4. Device for damping the rolling motion of vehicle trailers by means of a friction brake (6) on the trailer hitch (1), in which the friction brake (6) has at least two mutually opposite, floatingly held friction rams (9, 10) which can be advanced and resiliently pressed onto the hitch member (2) of the towing vehicle, characterized in that the friction rams (9, 10) are connected to one another by a common resilient clamping element (7) which is mounted floatingly with respect to the hitch member (2), the friction rams (9, 10) being individually advanced, having separate actuating members (15, 16) and being able to be resiliently pressed onto the hitch member (2) in the closed position by the clamping element (7).

5. Device according to Claim 4, characterized in that the friction rams (9, 10) are mounted on the clamping element (7).

6. Device according to Claim 4 or 5, characterized in that the clamping element (7) is mounted floatingly in the direction of the friction ram axes (14) above the hitch member (2).

7. Device according to Claim 4, 5 or 6, characterized in that the clamping element (7) is constructed as a spring saddle which extends over the hitch housing (4) and is guided transversely to the friction ram axes (14).

8. Device according to one of Claims 4 to 7, characterized in that the friction rams (9, 10) are guided in lateral through openings (20) of the hitch housing (4).

9. Device according to one of Claims 4 to 8, characterized in that the actuating members (15, 16) are rotatably mounted on the clamping element (7).

10. Device according to Claim 9, characterized in that one actuating member (15) is constructed as a clamping wheel and the other actuating member (16) is constructed as a clamping lever.

11. Device according to Claim 9 or 10, characterized in that the friction rams (9, 10) are held in the actuating members (15, 16) with axial support, the actuating members (15, 16) being advanced on the clamping element (7) by means of a screw connection (21).

12. Device according to one of Claims 4 to 11, characterized in that one actuating member (15) has a sliding clutch (24).

## Revendications

1. Procédé d'amortissement du mouvement de roulis de remorques de véhicules au moyen d'un frein à friction (6) sur l'attelage de remorque (1), au moins deux poussoirs à friction (9, 10) montés flottants en vis-à-vis l'un de l'autre étant avancés et pressés élastiquement contre l'organe d'attelage (2) du véhicule de traction, caractérisé en ce que les poussoirs à friction (9, 10) sont avancés individuellement et l'un après l'autre contre l'organe d'attelage (2) par des organes d'actionnement (15, 16) séparés, le mouvement d'avance du premier poussoir à friction (9) amenant les deux poussoirs à friction (9, 10) en contact avec l'organe d'attelage (2) avec enregistrement de l'usure par frottement et le mouvement d'avance du deuxième poussoir à friction (10) ou poussoir à friction supplémentaire s'accompagnant de l'application d'une force de serrage élastique, qui agit entre les poussoirs à friction (9, 10).

2. Procédé selon la revendication 1, caractérisé en ce que la force de pression du premier poussoir à friction (9) est limitée.

3. Procédé selon la revendication 1 ou 2, caractérisé en ce que le deuxième poussoir à friction (10) ou poussoir à friction supplémentaire est avancé avec une course et une force de serrage constantes.

4. Dispositif d'amortissement du mouvement de roulis de remorques de véhicules au moyen d'un frein à friction (6) sur l'attelage de remorque (1), le frein à friction (6) comportant au moins deux poussoirs à friction (9, 10) montés flottants en vis-à-vis l'un de l'autre qui peuvent être avancés et pressés élastiquement contre l'organe d'attelage (2) du véhicule de traction, caractérisé en ce que les poussoirs à friction (9, 10) sont reliés entre eux par un élément de serrage (7) à ressort commun qui est monté flottant par rapport à l'organe d'attelage (2), les poussoirs à friction (9, 10) étant avancés individuellement, comportant des organes d'actionnement (15, 16) séparés et pouvant, dans la position de fermeture, être pressés avec élasticité contre l'organe d'attelage (2) par l'élément de serrage (7).

5. Dispositif selon la revendication 4, caractérisé en ce que les poussoirs à friction (9, 10) sont montés sur l'élément de serrage (7).

6. Dispositif selon la revendication 4 ou 5, caractérisé en ce que l'élément de serrage (7) est monté flottant au-dessus de l'organe d'attelage (2) dans la direction des axes (14) des poussoirs à friction.

7. Dispositif selon la revendication 4, 5 ou 6, caractérisé en ce que l'élément de serrage (7) est réalisé sous la forme d'un étrier à ressort qui surmonte la boîte d'attelage (4) et est guidé transversalement par rapport aux axes (14) de poussoirs à friction.

8. Dispositif selon l'une des revendications 4 à 7, caractérisé en ce que les poussoirs à friction (9, 10) sont guidés dans des ouvertures de passage (20) latérales de la boîte d'attelage (4).

9. Dispositif selon l'une des revendications 4 à 8, caractérisé en ce que les organes d'actionnement (15, 16) sont montés tournants sur l'élément de serrage (7).

10. Dispositif selon la revendication 9, caractérisé en ce que l'un (15) des organes d'actionnement est réalisé sous forme de roue de serrage et l'autre (16) sous la forme d'un levier de serrage.

11. Dispositif selon la revendication 9 ou 10, caractérisé en ce que les poussoirs à friction (9, 10) sont tenus dans les organes d'actionnement (15, 16) en prenant appui axialement, les organes d'actionnement (15, 16) étant réglés au moyen d'un assemblage vissé (21) sur l'élément de serrage (7).

12. Dispositif selon l'une des revendications 4 à 11, caractérisé en ce que l'un (15) des organes d'actionnement comporte un accouplement à glissement (24).
